# EUROPÄISCHE PATENTSCHRIFT

(11) **EP 3 275 611 B1**
(45) Veröffentlichungstag und Bekanntmachung des Hinweises auf die Patenterteilung: **25.06.2025**
(21) Anmeldenummer: 17181842.0
(22) Anmeldetag: 18.07.2017
(51) Int. Cl.: B27N 5/00

(54) **VERFAHREN ZUR HERSTELLUNG EINER FASERPLATTE**
METHOD FOR PRODUCING A FIBREBOARD PANEL
PROCÉDÉ DE FABRICATION D'UN PANNEAU DE FIBRES

(30) Priorität: 21.07.2016 EP 16001607
(43) Veröffentlichungstag der Anmeldung: 31.01.2018
(73) Patentinhaber: Homann Holzwerkstoffe GmbH, 81925 München (DE)
(72) Erfinder: HOMANN, Fritz, 81925 München (DE)
(74) Vertreter: Brinkmann & Partner

(56) Entgegenhaltungen:
- EP-A1- 0 004 999
- EP-A1- 1 110 687
- AT-B- 321 555
- DE-A1- 10 153 175
- DE-A1- 2 364 025
- US-A- 5 932 156

## Beschreibung

Die vorliegende Erfindung betrifft eine Faserplatte sowie ein Verfahren zu ihrer Herstellung.

Weiterhin offenbart die Erfindung eine Vorrichtung zur Herstellung entsprechender Faserplatten.

Faserplatten aus lignocellulose-haltigen Fasern, insbesondere Holzfasern, als solche sowie Verfahren zu deren Herstellung sind aus dem Stand der Technik an sich gut bekannt, so dass es eines gesonderten druckschriftlichen Nachweises an dieser Stelle nicht bedarf.

Bei einer mitteldichten Faserplatte, kurz MDF-Platte genannt, handelt es sich typischerweise um eine Platte aus einem Holzfaserwerkstoff. Nach der einschlägigen europäischen Norm liegt die mittlere Rohdichte einer MDF-Platte zwischen 650 kg/m3 und 800 kg/m3. Platten mit einer mittleren Rohdichte von über 800 kg/m3 werden als hochdichte Faserplatten (HDF) und mit einer mittleren Rohdichte von unter 650 kg/m3 als Leicht-MDF bezeichnet. Bei einer mittleren Rohdichte von unter 550 kg/m3 spricht man von Ultraleicht-MDF.

Die Herstellung einer mitteldichten Faserplatte und auch einer ultraleicht-MDF Platte erfolgt typischerweise im sogenannten Trockenverfahren. Danach werden in der sogenannten Blow-Line-Beleimung beleimte und trockene Fasern hergestellt, die einen Feuchtigkeitsgehalt von unter 12% atro aufweisen, wobei alternative Beleimungsmethoden aus dem Stand der Technik bekannt sind. Alternative Beleimungsmethoden sind beispielsweise die Mischerbeleimung und die Trockenfaserbeleimung. Nach einer Beleimung der Fasern erfolgt alternativ oder optional ein weiterer Trocknungsvorgang. Aus dem Stand der Technik ist auch die Verwendung sogenannter Mehrkomponentenfasern, beispielsweise bico-Fasern bekannt. Es handelt sich um Fasern mit unterschiedlichen Leimkomponenten, die beispielsweise durch Temperatur aktivierbar sind.

Die trocknen und beleimten bzw. gemischten Fasern werden alsdann beispielsweise mittels einer Streumaschine zu einer Streumatte ausgebracht. Es kommt zu diesem Zweck typischerweise ein Transportband zum Einsatz, auf welches die Streumaschine abstreut.

In einem letzten Verfahrensschritt wird die Streumatte verpresst und es findet eine Bindemittelaushärtung durch Wärmeeintrag statt. Dies erfolgt in aller Regel auf kontinuierlich oder diskontinuierlich arbeitenden Heißpressen.

Der in vorbeschriebener Weise hergestellte Plattenstrang kann dann zur Ausbildung einzelner Platten wunschgemäß besäumt und abgelängt werden.

Die vorbeschriebene Verfahrensdurchführung ist aus dem Stand der Technik hinlänglich bekannt.

Eine weiterentwickelte Verfahrensdurchführung ist aus der EP 1 110 687 B2 bekannt geworden. Das hier beschriebene Verfahren betrifft die Herstellung von leichten Faserplatten mit einer mittleren Rohdichte von 60 bis 350 kg/m3, die als Wärmedämmplatten im Bauwesen Verwendung finden. Dabei besteht die Besonderheit des hier beschriebenen Verfahrens darin, dass ein Rohdichteprofil ausgebildet wird, wonach sich eine Randerhöhung der Rohdichte gegenüber der mittleren Rohdichte der Faserplatte von mindestens 20% ergibt. Dies wird verfahrenstechnisch dadurch erreicht, dass die Streumatte vor einem Verpressen deckseitig mit Wasser besprüht wird. Im Ergebnis ergibt sich eine leichte Faserplatte, die hinsichtlich ihrer großen Oberfläche Randbereiche aufweist, deren Dichte um wenigstens 20% über der mittleren Rohdichte liegt. Diese Randbereiche weisen typischerweise eine Dicke von ca. 0,2 mm bis 0,5 mm auf.

Es ist weiterhin bekannt, entsprechende Platten, insbesondere ultraleichte MDF-Platten als Sandwichplatten herzustellen. Dabei werden Außenschichten aus einem ersten Faser-/Bindemittelsystem hergestellt und dazwischenliegende Bereiche aus einem zweiten Faser-/Bindemittelsystem. Es lassen sich somit Platten herstellen, die in der Handhabung, in der Verarbeitung und Weiterverarbeitung vereinfacht sind.

Die vorbekannten Platten unterschiedlichster Art werden für unterschiedlichste Verwendungszwecke eingesetzt, Matten als Dämmstoffe, HDF-Platten zum Ausfachen, Verkleiden, Abdecken und dergleichen. Allerdings sind die bekannten Matten und Platten aufgrund ihrer unterschiedlichen Dichten und Herstellungsparameter mit unterschiedlichsten mechanischen Eigenschaften versehen. Es besteht ein Bedarf an möglichst leichten und dennoch äußerst stabilen Platten, der jedoch bisher noch nicht befriedigend gedeckt werden kann. Entweder sind die Platten mechanisch sehr widerstandsfähig, dann sind sie üblicherweise aufgrund hoher Verdichtung mit einer vollen Rohdichte versehen, also schwer, oder sie sind entsprechend leichter und nicht so stabil. Durch Materialkombination wurde versucht, hier Abhilfe zu schaffen. Hier sind aber auch Beschränkungen durch die Verfahrenstechnik und die Fertigungsmaschinen hinzunehmen.

Ausgehend vom vorbeschriebenen Stand der Technik liegt der Erfindung die **Aufgabe** zugrunde, ein Verfahren zur Herstellung einer verformten Faserplatte bereitzustellen, welches im kontinuierlichen Verfahren eine industriell reproduzierbare verformte Holzfaserplatte herstellbar macht.

Zur technischen **Lösung** wird mit der Erfindung ein Verfahren mit den Merkmalen des Patentanspruches 1 vorgeschlagen. Weitere Vorteile und Merkmale ergeben sich aus den Unteransprüchen.

Erfindungsgemäß wird ein Verfahren vorgeschlagen, bei welchem zunächst vorzugsweise im kontinuierlichen Verfahren eine Holzfasermatte mit definierten Eigenschaften hergestellt wird.

Holzfasermatten werden vorzugsweise aus Holzhackschnitzeln hergestellt, insbesondere Nadelholzhackschnitzeln. Diese weisen eine Korngröße von etwa 40 x 40 x 5 mm auf und umfassen in erster Linie Kiefer und Fichte. Die Holzhackschnitzel werden ohne Rinde bereitgestellt und weisen in der Regel einen Wassergehalt von ca. 50% auf. Zur Verkürzung der erforderlichen Lagerung unter Wetterbedingungen im Außenbereich ist es von Vorteil, wenn die Holzhackschnitzel aus dem regionalen Umkreis angeliefert werden. Nach etwa 4 bis 5 Tagen Außenlagerung erfolgt eine Reinigung über einen Scheibenseparator oder auch eine Trockenreinigung.

Die Holzhackschnitzel müssen vor der Zerfaserung vorverarbeitet werden. Es erfolgt eine Vorwärmung mittels Dampfeintrag und für eine vorgegebene Zeit bei vorgegebenem Druck und Temperatur werden die Holzhackschnitzel gekocht. Dieser Vorgang dauert zwischen einer und vier Minuten und läuft bei Temperaturen zwischen 160°C und 200°C ab.

Anschließend erfolgt die Zerfaserung vorzugsweise über Refiner. Es ergeben sich Faserlängen von 2 mm bis 30 mm, Dicken von 0,2 mm bis 1,5 mm, wobei für die vorliegende Erfindung Faserlängen von über 10 mm vorteilhaft sein können.

Anschließend erfolgt eine Trocknung durch einen Brenner oder Heißluft in entsprechenden Trocknerrohren. Es ergibt sich eine Ausgangsfeuchte zwischen 6% und 15%.

Eine anschließende Beleimung erfolgt durch Einblasen von Leim in eine Faserschüttung. Anschließend wird die Mischung auf eine Formstraße gestreut und durch eine mechanische Einrichtung auf ein gleichmäßige Höhe gebracht und dabei auch das gewünschte Flächengewicht eingestellt.

In einer Vorpresse erfolgt eine Vorverdichtung und eine Seitenbesäumung.

Die Vorpresse wird mit einem hydraulischen Druck von 150 bar bis 200 bar betrieben und die Durchlaufzeit einer Matte liegt zwischen 30 sec. und 120 sec. Die Mattentemperatur ergibt sich am Ende zwischen 18°C und 22°C bei einer Restfeuchte von 6% bis 15%.

Bei einer Dampftemperatur im Bereich zwischen 100°C und 110°C und einem Dampfdruck zwischen 0,1 bar und 8 bar wird eine Dampfmenge von ca. 60 kg/h bis 500 kg/h durch die Holzfasermatte geführt, die dabei eine Bedampfungseinrichtung durchläuft. Der Dampf kann sowohl von oben als auch von unten oder aus beiden Richtungen in die Fasermatte strömen.

Gemäß einem vorteilhaften Vorschlag der Erfindung kann anschließend eine Bedüsung oder ein Beschichtung der Fasermatte erfolgen. Zusätzlich können Härter eingebracht werden. In erster Linie erfolgt die Bedüsung mit einem Trennmittel, damit es nicht zu Anhaftungen zwischen Fasermaterial und den anschließenden Walzenoberflächen kommt. Hier werden Mengen zwischen 10 g/m² und 100 g/m² Fasermatte eingesetzt. Das Einbringen von Trennmittel und/oder Härter kann auch durch einen zusätzlichen Dampfstoß erfolgen.

Anschließend wird die Holzfasermatte mit einem Flächengewicht von 1,0 kg/m² bis 3,0 kg/m² und einer Dicke von 10 mm bis 30 mm bei einem Druck zwischen 150 N/m² und 250 N/m² und einer Temperatur von 100°C bis 350°C und Geschwindigkeiten von 0,5 m/min bis 120 m/min durch wenigstens ein Walzenpaar geführt. Bei einer Ausgangsdicke der Holzfasermatte von 10 mm bis 30 mm ergibt sich anschließend eine Platte mit einer Materialdicke von 0,5 mm bis 2 mm, die eine dreidimensionale wellenartige Verformung in Höhe von 6,5 mm bis 50 mm erreichen kann.

Es kommen mindestens eine oder mehrere Kalanderwalzenpaare zum Einsatz, die auch Riffelwalzen oder Kombinationen davon ausweisen können.

In vorteilhafter Weise kann nach der Verformung eine zusätzliche Temperaturzufuhr beispielsweise durch Mikrowellen, Infrarottechnik oder dergleichen erfolgen.

Anschließend erfolgt die Aushärtung beziehungsweise Auskühlung der verformten Platte, was zwischen 2 und 5 Minuten in Anspruch nehmen kann.

Das Ergebnis dieses Verfahrens ist eine Faserplatte aus lignocellulose-haltigen Fasern, insbesondere Holzfasern, und Bindemittel vorgeschlagen, wobei diese eine eigenstabile in wenigstens einer Richtung verlaufende, periodisch wiederkehrende dreidimensionale Verformung aufweist.

Die Faserplatte ist ein plattenförmiger aus lignocellulose-haltigen Fasern bestehender Formkörper. Er ist im Wesentlichen plattenförmig. Während eine herkömmliche Platte im Wesentlichen als mit ebenen Oberflächen versehener Quader bezeichnet werden kann, welcher durch Seitenkanten und zwei äußere Oberflächen definiert ist, welche Oberflächen in einer durch die Seitenkanten definierten Ebene liegen, bedeutet dreidimensionale Verformung im Sinne der vorliegenden Erfindung, dass die Platte an sich bei im Wesentlichen zueinander parallelen Oberflächen in einer senkrecht zu den Seitenkaten liegenden Richtung verform ist. Dies können im einfachsten denkbaren Fall einfache Strukturen sein, beispielsweise Pyramiden. Eine dreidimensionale Verformung umfasst jedoch Knicke, Winkel, Poren und dergleichen.

Eigenstabil im Sinne der vorliegenden Erfindung bedeutet, dass die Platte nach ihrer Herstellung in ihrem verformten Zustand mechanisch fest verbleibt, also nicht flexibel in dem Sinne ist, dass die Verformung entfernbar ist. Sie mag eine gewisse Elastizität aufweisen, ist jedoch insofern fest genug, als sie ihre verformte Form beibehält.

In wenigstens einer Richtung verlaufend und periodisch wiederkehrend bedeutet aber, dass sich die Verformung entlang einer der Plattenrichtung ständig fortsetzt und wiederholt. So kann eine Platte beispielsweise wellenförmig ausgebracht werden, sie kann Winkel aufweisen oder dergleichen. Bringt man entlang einer Plattenrichtung einen Querschnitt an, so dass die Verformung seitlich betrachtet werden kann, zeigt diese eine Art Welle, einen Sägezahn, ein Rechteckprofil oder dergleichen.

Die Verformung kann schräg zu den Seitenkanten verlaufen. Sie kann auch im Grunde parallel zu einer der Seitenkanten verlaufend ausgebildet sein.

Gemäß einem vorteilhaften Vorschlag wird die Platte von der Rohdichte her als HDF-Platte ausgebildet. Sie enthält vorzugsweise lange Fasern, beispielsweise 15 bis 20 mm.

Durch Ausbildung der Faserplatte entsteht eine Platte, die im Verhältnis zu ihrer Rohdichte ein großes Volumen ausfüllt. Raumvolumen im Sinne der vorliegenden Erfindung bezeichnet den im Wesentlichen quaderförmigen Raum, der von der Platte ausgefüllt wird. Während Rohdichte oder Plattenvolumen selbst sich auf den feststofflichen Bereich der Platte beziehen ist das Raumvolumen dadurch gebildet, dass ebene Flächen auf den obersten und untersten Vorsprüngen der verformten Platte durch umlaufende Seitenkanten zu einem die Platte vollständig umschließenden Quader ergänzt werden. Dieser Quader hat ein Volumen, welches deutlich größer ist als das durch den feststofflichen Bereich der Platte selbst gebildete Volumen. Die Plattendicke wird gemäß einem vorteilhaften Vorschlag der Erfindung mindestens um den Faktor 3 von der Volumenhöhe überschritten.

Die Platte weist als besonderen Vorteil auf, dass sie erhöhte mechanische Eigenschaften mit einem geringen Raumgewicht verbindet. Durch die Ausbildung der Verformung wird die Platte in sich mechanisch stabiler. Es ist allgemein bekannt, dass gebogene oder geknickte Elemente bei Druckbelastung entlang der Knickachse besonders stabil sind. Im vorliegenden Fall ist die Platte aber auch aufgrund ihrer Rohdichte in Verformungsrichtung ausgesprochen stabil und bruchfest.

Die Platte hat den Vorteil, die Anwendungsbereiche solcher Platten erheblich zu erweitern. Eine solche Platte kann aufgrund ihres geringen Gewichtes im Vergleich zum Raumvolumen beispielsweise als Füllung eingesetzt werden. Derartige Einsatzbereiche ergeben sich beispielsweise bei der Herstellung von Türen und Wandelementen. Aufgrund ihrer mechanischen Festigkeit kann die Fläche angebohrt werden und Schrauben halten.

Sie kann Nägel halten.

Sie kann direkt mit sogenannten Umleimern versehen werden, das heißt Leisten, die auf die Seitenkanten geklebt oder sonst wie befestigt werden. Aufgrund der dreidimensionalen Verformung bietet die Platte an den Seitenkanten eine erhebliche Befestigungsfläche.

Die Platten können auch im Rahmen von Sandwichaufbauten verwendet werden. Sie können mit gleichartigen, dreidimensional verformten Platten verbunden werden, indem diese übereinander gelegt und wie auch immer fixiert werden. Dabei ist es von Vorteil, wen die dreidimensionalen Verformungen zueinander winklig angeordnet werden. Werden zwei identische Platten beispielsweise mit einer Wellenkontur miteinander verbunden, so können diese rechtwinklig zueinander aufeinandergelegt werden. Auf diese Weise ergeben sich eine Vielzahl von Berührungspunkten, ein erhebliches Raumvolumen bei sehr geringem Plattengewicht. Die mechanische Stabilität ist immens.

Gemäß einem weiteren vorteilhaften Vorschlag der Erfindung können auf die Oberfläche dreidimensional verformter erfindungsgemäßer Platten ebene Platten aufgesetzt werden. Auf diese Weise ergeben sich in Bezug auf das Raumvolumen sehr leichte aber äußerst stabile Platten, wenn die ebenen Deckplatten beispielsweise sehr dünne HDF-Platten sind.

Erfindungsgemäße Walzen können an den Oberflächen so ausgebildet sein, dass sie den Faserkuchen in entsprechender Weise verformen. Die Walzen sind beheizt, wozu unterschiedlichste Verfahren einsetzbar sind. So können die Walzen elektrisch beheizt sein, mit heißem Öl gefüllt sein, Kombinationen davon aufweisen, und sie können mit zusätzlichen externen Behandlungsquellen wie beispielsweise UV-Strahlung, IR-Strahlung und dergleichen, Gasbrenner usw. kombiniert sein. Wesentlich ist, dass zwischen den Walzen die Verformung in den aktivierten Faserkuchen eingebracht und durch unmittelbares Aushärten beibehalten wird. Je nach Anlagentechnik kann es sinnvoll sein, Trennmittel zu verwenden, um ein Anbacken von Faserkuchen an Bearbeitungsflächen zu unterbinden.

Gemäß einem vorteilhaften Vorschlag findet die Herstellung vom Ausdünnen des Faserkuchens durch Ausstreuen des Fasergemisches bis hin zur Aushärtung der Platte in einem kontinuierlichen Verfahren statt.

Gemäß einem vorteilhaften Vorschlag findet anschließend eine Konfektionierung statt.

Ein wesentlicher Aspekt der vorliegenden Erfindung ist die Bereitstellung einer neuartigen und erfinderischen Formstation für die Herstellung entsprechender Faserplatten. Die Formstation umfasst in erfindungsgemäßer Weise ein Walzenpaar zur Verformung und Aushärtung eines aktivierten Faserkuchens. Dieses Walzenpaar umfasst wenigstens eine in beschriebener Weise beheizte Walze, wobei beide Walzen in ihren Oberflächen so ausgebildet sind, dass sie die gewünschte Verformung in den Faserkuchen einbringen können. Der Begriff Walze im Sinne der vorliegenden Erfindung ist dabei weit zu fassen, wobei es sich auch um kurze Bandeinheiten handeln kann.

Die Faserplatte härtet nach sehr kurzer Behandlung mit Wärme und Feuchtigkeit aus. Sie bleibt, einmal verformt, stabil in der Form. Sie benötigt keinerlei Stege und ist jederzeit reproduzierbar. Darüber hinaus ist sie ressourcenschonend und recyclebar. Mehr als 80 % der Bestandteile sind organischer Natur. Sie kann mit formaldehydfreien Bindemitteln hergestellt werden und kann im Vergleich zu anderen Leichtbaukonstruktionen auch ohne Rahmen aufgrund der hohen Eigenstabilität eingesetzt werden. Konstruktionsbedingt kann sie eine höhere Stabilität vorweisen als vergleichbare Vollmaterialprodukte, füllt aber ein großes Volumen bei geringem Gewicht. Darüber hinaus kann sie mit einer glatten, homogenen Oberfläche versehen sein, so dass sie direkt mit unterschiedlichen Materialien beschichtbar beziehungsweise kaschierbar ist.

Die Faserplatte eignet sich in besonderer Weise je nach Anwendungsfall für den Aufbau von Sandwichprodukten. So können gleichartige Faserplatten übereinander gelegt werden. Werde diese winklig zueinander angeordnet entsteht ein sehr großvolumiger Verbund mit zwei leichten verformten Faserplatten. Auch können ebene Platten aufgesetzt werden. Diese Art der Beplankung führt zu sehr stabilen Elementen. Diese können beispielsweise als Türblatt und dergleichen verwendet werden. Während im Stand der Technik bei Wabenbauten und dergleichen üblicherweise gesamtflächige Beleimungen zur Herstellung von Sandwichverbund vorgenommen werden, weil der Leim in der Regel aufgespritzt wird, wird mit der Erfindung vorgeschlagen, nur in einem minimalen Berührungsbereich zwischen benachbarten Platten Leim aufzubringen. Es ist denkbar, Wellenspitzen plan zu schleifen, und anschließend beispielsweise mit einer Walze, einer schlanken Spritze, einer Maske oder dergleichen Leim auf die Wellenkuppen aufzubringen, um dann einen Verbund mit einer anderen gewellten Platte oder einer ebenen Platte herzustellen. Diese minimale Beleimung führt dazu, dass nicht die gesamten Platten mit einem Film belegt sind. Es ergibt sich weniger Ausdünstung, ein geringeres Gewicht und die Materialeigenschaften des Faserplattenmaterials kommen zur Geltung.

Mit der Erfindung wird ein neuartiges Herstellungsverfahren bereitgestellt, welches es ermöglicht, unter Verwendung einer neuartigen Herstellungseinheit mit überschaubarem wirtschaftlichem Aufwand Faserplatten mit besonderer mechanischer Stabilität bei zeitgleichem geringem Gewicht bezogen auf das Raumvolumen herzustellen. Weitere Vorteile und Merkmale der Erfindung ergeben sich aus der folgenden Beschreibung anhand der Figuren. Dabei zeigen:
- Fig. 1: Eine schematische Seitenansicht einer erfindungsgemäßen Faserplatte;
- Fig. 2: eine perspektivische Teilansicht einer Faserplatte gemäß der Erfindung und
- Fig. 3: eine schematische Seitenansicht einer Sandwichplatte.

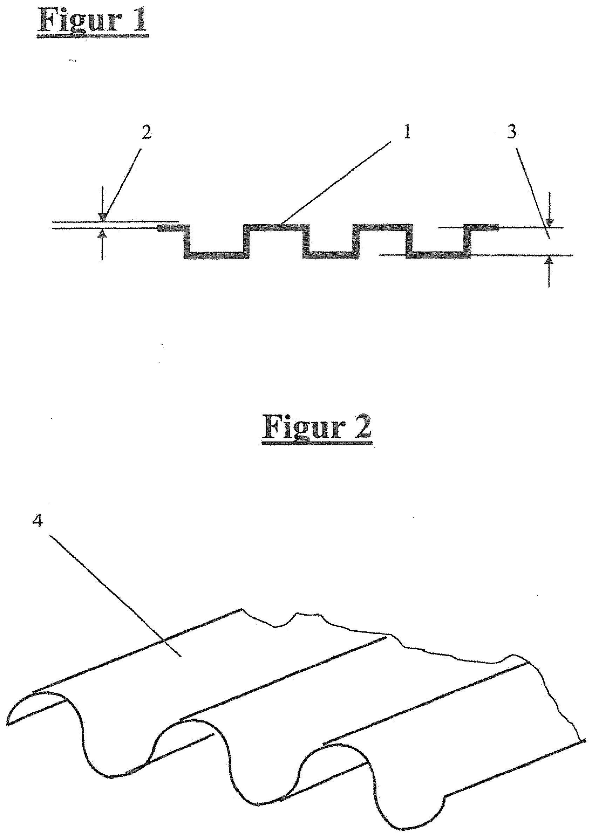

Figur 1 zeigt eine Faserplatte 1, welche im gezeigten Ausführungsbeispiel eine fortschreitende rechteckige Wellenstruktur aufweist. Zur Erläuterung ist die Bemaßung der Plattendicke 2 einerseits und der Plattenhöhe 3 andererseits gezeigt. Die Plattenhöhe ist zusammen mit dem Umfang der Platte das Maß zur Errechnung des Raumvolumens der Platte. Es zeigt sich, dass ein sehr großes Raumvolumen durch eine sehr eigenstabile dünne Platte 1 erzielbar ist, welche nur die Dicke 2 aufweist.

Figur 2 zeigt schematisch eine Platte 4 mit einem im Wesentlichen synusförmigen Verformungsverlauf.

Es ist ganz offensichtlich, dass diese Platten, im Sandwich, aber auch in Alleinstellung, eine hohe mechanische Festigkeit bei einem geringen Raumgewicht bieten.

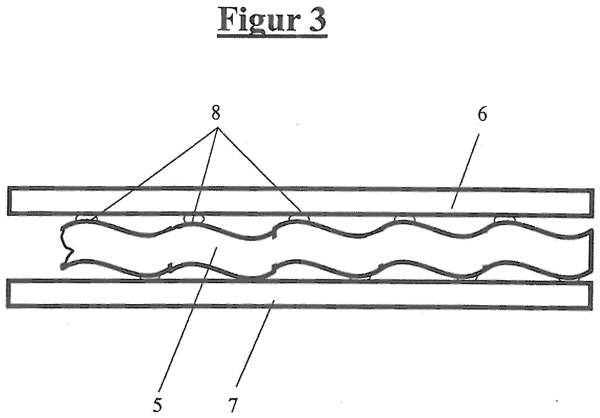

Wie die in Figur 3 gezeigte Darstellung einer Sandwichplatte zeigt, wird beispielsweise eine gewellte und verformte Platte 5 nach der Erfindung mit zwei ebenen Platten 6 und 7 an beiden Oberflächen beplankt. Es ergeben sich Berührungslinien entlang der Wellengruppen. Die mit 8 angedeuteten Bereiche sind Verbindungsbereiche, in denen Kleber aufgebracht ist. Die Kuppen der Platten 5 können vorher eingeebnet werden, beispielsweise durch planschleifen. Der Kleber kann in den Verbindungsbereichen 8 mittels einer Walze, durch linienförmiges Sprühen, mittels einer Maske oder dergleichen aufgebracht werden. Durch anschließendes Verpressen entsteht der Sandwichverbund. Im Bereich der unteren ebenen Platte sind entsprechende Verbindungsbereiche in gleicher Weise ausgebildet.

Die beschriebenen Ausführungsbeispiele dienen nur der Erläuterung und sind nicht beschränkend.

### Bezugszeichenliste

- 1: Platte
- 2: Dicke
- 3: Höhe
- 4: Platte
- 5: verformte Platte
- 6: ebene Platte
- 7: ebene Platte
- 8: Verbindungsbereiche

## Patentansprüche

1. Verfahren zur Herstellung einer Faserplatte aus Holzfasern und Bindemitteln, wobei eine Bindemittel aufweisende Holzfasermatte mit vorgegebener Dicke und Feuchte sowie einem vorgegebenen Flächengewicht im kontinuierlichen Verfahren in einer Bedampfungseinheit mit Dampf beaufschlagt wird, wobei Bindemittel aktiviert werden, und anschließend zwischen wenigstens einem Walzenpaar dreidimensional verformt wird.

2. Verfahren nach Anspruch 1, **dadurch gekennzeichnet, dass** die Holzfasermatte in einem kontinuierlichen Verfahren bereitgestellt wird.

3. Verfahren nach einem der vorhergehenden Ansprüche, **dadurch gekennzeichnet, dass** die Dampftemperatur zwischen 100°C und 110°C beträgt.

4. Verfahren nach einem der vorhergehenden Ansprüche, **dadurch gekennzeichnet, dass** der Dampfdruck zwischen 0,1 bis 8 bar beträgt.

5. Verfahren nach einem der vorhergehenden Ansprüche, **dadurch gekennzeichnet, dass** die Dampfmenge zwischen 60 und 500 kg/h liegt.

6. Verfahren nach einem der vorhergehenden Ansprüche, **dadurch gekennzeichnet, dass** vor dem Eintritt der Holzfasermatte in das wenigstens eine Walzenpaar diese mit einem Trennmittel beschichtet wird.

7. Verfahren nach Anspruch 6, **dadurch gekennzeichnet, dass** das Trennmittel so gewählt ist, dass es die Abbindezeit des Bindemittels fördert.

8. Verfahren nach einem der vorhergehenden Ansprüche, **dadurch gekennzeichnet, dass** der Druck im Walzenpaar im Bereich von 150 N/mm² bis 300 N/mm² liegt.

9. Verfahren nach einem der vorhergehenden Ansprüche, **dadurch gekennzeichnet, dass** die Temperatur im Walzenpaar zwischen 100°C und 350°C liegt.

10. Verfahren nach einem der vorhergehenden Ansprüche, **dadurch gekennzeichnet, dass** die Holzfasermatte mit einer Geschwindigkeit von 0,5 m/min bis 120 m/min durch das Walzenpaar geführt wird.

11. Verfahren nach einem der vorhergehenden Ansprüche, **dadurch gekennzeichnet, dass** die Holzfasermatte nach Verlassen der Walzenpaare mit einer zusätzlichen Temperaturzufuhr behandelt wird.

12. Verfahren nach einem der vorhergehenden Ansprüche, **dadurch gekennzeichnet, dass** die verformte Holzfasermatte zwischen 2 und 5 min ausgehärtet wird.

## Claims

1. Method for producing a fiberboard panel from wood fibers and binding agents, wherein a wood fiber mat comprising a binding agent and having a predetermined thickness and moisture content as well as a predetermined basis weight is subjected to steam in a continuous process in a steaming unit, wherein binding agents are activated, and is then three-dimensionally shaped between at least one pair of rollers.

2. Method according to claim 1, **characterized in that** the wood fiber mat is provided in a continuous process.

3. Method according to one of the preceding claims, **characterized in that** the steam temperature is between 100°C and 110°C.

4. Method according to one of the preceding claims, **characterized in that** the steam pressure is between 0.1 and 8 bar.

5. Method according to one of the preceding claims, **characterized in that** the steam quantity is between 60 and 500 kg/h.

6. Method according to one of the preceding claims, **characterized in that** before the wood fiber mat enters the at least one pair of rollers, it is coated with a separating agent.

7. Method according to claim 6, **characterized in that** the separating agent is selected so that it promotes the setting time of the binding agent.

8. Method according to one of the preceding claims, **characterized in that** the pressure in the pair of rollers is in the range from 150 N/mm² to 300 N/mm².

9. Method according to one of the preceding claims, **characterized in that** the temperature in the pair of rollers is between 100°C and 350°C.

10. Method according to one of the preceding claims, **characterized in that** the wood fiber mat is passed through the pair of rollers at a speed of 0.5 n/min to 120 m/min.

11. Method according to one of the preceding claims, **characterized in that** the wood fiber mat is treated with an additional temperature supply after leaving the roller pairs.

12. Method according to one of the preceding claims, **characterized in that** the deformed wood fiber mat is cured for between 2 and 5 minutes.

## Revendications

1. Procédé de fabrication d'un panneau de fibres à partir de fibres de bois et de liants, dans lequel un mat de fibres de bois contenant un liant, d'une épaisseur et d'une humidité prédéfinies ainsi que d'un grammage prédéfini, est soumis à la vapeur dans un procédé continu dans une unité de vaporisation, les liants étant activés, puis est déformé en trois dimensions entre au moins une paire de cylindres.

2. Procédé selon la revendication 1, **caractérisé en ce que** le mat de fibres de bois est préparé dans un procédé continu.

3. Procédé selon l'une quelconque des revendications précédentes, **caractérisé en ce que** la température de la vapeur est comprise entre 100 °C et 110 °C.

4. Procédé selon l'une quelconque des revendications précédentes, **caractérisé en ce que** la pression de vapeur est comprise entre 0,1 et 8 bars.

5. Procédé selon l'une quelconque des revendications précédentes, **caractérisé en ce que** la quantité de vapeur est comprise entre 60 et 500 kg/h.

6. Procédé selon l'une quelconque des revendications précédentes, **caractérisé en ce que**, avant l'entrée mat de fibres de bois dans au moins une paire de rouleaux, celle-ci est enduite d'un agent de séparation.

7. Procédé selon la revendication 6, **caractérisé en ce que** l'agent de séparation est choisi de manière à favoriser le temps de prise du liant.

8. Procédé selon l'une quelconque des revendications précédentes, **caractérisé en ce que** la pression dans la paire de rouleaux est comprise entre 150 N/mm2 et 300 N/mm2.

9. Procédé selon l'une quelconque des revendications précédentes, **caractérisé en ce que** la température dans la paire de rouleaux est comprise entre 100 °C et 350 °C.

10. Procédé selon l'une quelconque des revendications précédentes, **caractérisé en ce que** le mat de fibres de bois est guidé à travers la paire de rouleaux à une vitesse comprise entre 0,5 m/min et 120 m/min.

11. Procédé selon l'une quelconque des revendications précédentes, **caractérisé en ce que** le mat de fibres de bois est traité par un apport de chaleur supplémentaire après avoir quitté les paires de rouleaux.

12. Procédé selon l'une des revendications précédentes, **caractérisé en ce que** le mat de fibres de bois déformé est durci pendant 2 à 5 minutes.
